Europäisches Patentamt

European Patent Office

Office européen des brevets

(19)

(11) **EP 0 467 394 B1**

(12) **EUROPEAN PATENT SPECIFICATION**

(45) Date of publication and mention
of the grant of the patent:
**20.10.1999   Bulletin 1999/42**

(51) Int Cl.⁶: **G06T 15/10**

(21) Application number: **91112126.7**

(22) Date of filing: **19.07.1991**

(54) **Graphic processor**

Graphisches Verarbeitungsgerät

Processeur graphique

(84) Designated Contracting States:
**DE FR GB**

(30) Priority: **20.07.1990   JP 19077890**

(43) Date of publication of application:
**22.01.1992   Bulletin 1992/04**

(73) Proprietor: **KABUSHIKI KAISHA TOSHIBA**
**Kawasaki-shi, Kanagawa-ken 210-8572 (JP)**

(72) Inventors:
• **Tachibana, Kazuhiko**
**Yokohama-shi, Kanagawa-ken (JP)**

• **Kai, Naoyuki**
**Kita-ku, Tokyo (JP)**
• **Nagashima, Ichiro**
**Yokohama-shi, Kanagawa-ken (JP)**

(74) Representative: **Lehn, Werner, Dipl.-Ing. et al**
**Hoffmann Eitle,**
**Patent- und Rechtsanwälte,**
**Postfach 81 04 20**
**81904 München (DE)**

(56) References cited:
**EP-A- 0 167 880          EP-A- 0 307 019**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a graphic processor for use in computer graphics, and particularly to a graphic processor for high speed preparation of a picture image composed by overlapping a plurality of three-dimensional figures.

Description of the Prior Art

In conventional three-dimensional graphics, a so-called Z buffer algorithm for comparing each Z value (depth value) of each pixel is used for producing a picture image composed by overlapping three-dimensional figures as shown in Fig.1. However, according to such a Z buffer algorithm, to add a partial change to a picture image once produced, all of the compositional figures must be rewritten. Therefore, the time required for completing a picture image is likely to be unnecessarily long. Moreover, there is a known method for preparing a picture image by overlapping figures prepared in advance as shown in Figs.2, 3 without using the Z buffer algorithm. In such a case, only incomplete picture images in which the depth of each pixel is ignored as shown in Figs.4, 5 can be obtained.

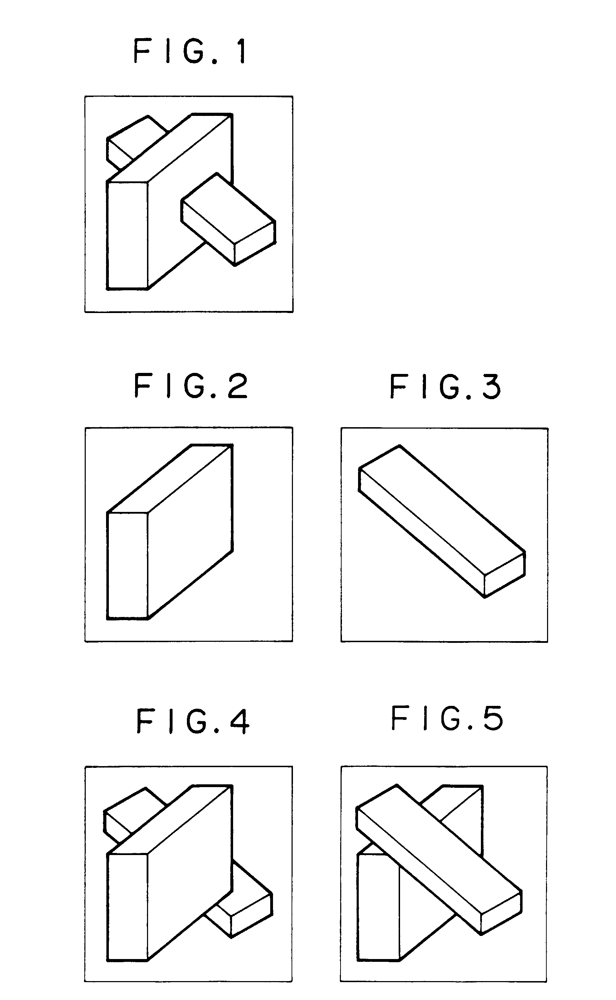

Namely, according to the Z buffer algorithm in conventional graphic processors, especially in case of changing a part of a picture image once produced, the time required for completion of the picture image must be long. On the other hand, according to the other conventional method based only on calculation of each pixel without using the Z buffer algorithm, it is not possible to obtain a picture image as shown in Fig.1 in which the depth of Each pixel of each compositional feature is fully considered.

Document EP 0 307 019 A2 describes an apparatus for modifying pixel data stored in a random access memory in order to perform hidden surface removal. Current depths values for each pixel are stored in an additional memory and compared with the input depth value, to determine whether input data should be written to define a new color and depth for the pixel at a certain position. When modifying a series of consecutive pixels of one row of the memory, the current depths values are read and compared in advance for each pixel during the writing period of one or more preceding pixels.

Further, document EP 0 167 880 A3 describes a computer graphics method for producing planar geometric projection images. A projection model is modified by changing the number of component objects and after each change an edge line segment is checked for visibility only with respect to the changes associated with the changed component objects.

SUMMARY OF THE INVENTION

The present invention as defined in claim 1 was made in order to solve the above-described problems, therefore it is an object thereof to provide a graphic processor capable of high speed preparation of a complete picture image composed by overlapping a plurality of figures.

To achieve the above-mentioned objects, a feature of the present invention is a graphic processor which comprises figure memory means for storing a plurality of bit-map figures for composing a picture image, depth value memory means for storing depth values of pixels respectively included in the bit-map figures, comparison means for comparing the depth value of each pixel in the bit-map figures when an optional bit-map figure is transferred onto a memory area of the other bit-map figures, and means for renewing each pixel value of a transfer target bit-map figure into each corresponding pixel value of a bit-map figure to be transferred to the transfer target bit-map figure when the bit-map figure to be transferred is to be shown in the foreground of the transfer target bit-map figure.

Namely, according to the graphic processor of the present invention, the plurality of three-dimensional figures prepared by the bit-map method are stored in advance in a memory unit. Each pixel of these figures has a depth value (hereinafter called Z value).

Then, a figure optionally selected to be transferred (hereinafter called source figure) is transferred to a memory area of a transfer target figure (hereinafter called destination figure), and the Z value of each pixel of the source figure is compared with the Z value of each pixel of the destination figure. As the result, when the pixels of the source figure are in the foreground of the pixels of the destination figure, each pixel value of the destination figure is renewed into each corresponding pixel value of the source figure. Thereby, it becomes possible to obtain a picture image composed by overlapping the plurality of figures with fully considering the depth of each figure.

These and other objects, features and advantages of the present invention will be more apparent from the following description of a preferred embodiment, taken in conjunction with the accompanying drawings.

BRIEF DESCRIPTION OF THE DRAWINGS

Figs.1 to 5 are diagrams of picture images for respectively explaining conventional methods of producing a picture image composed by overlapping a plurality of figures;

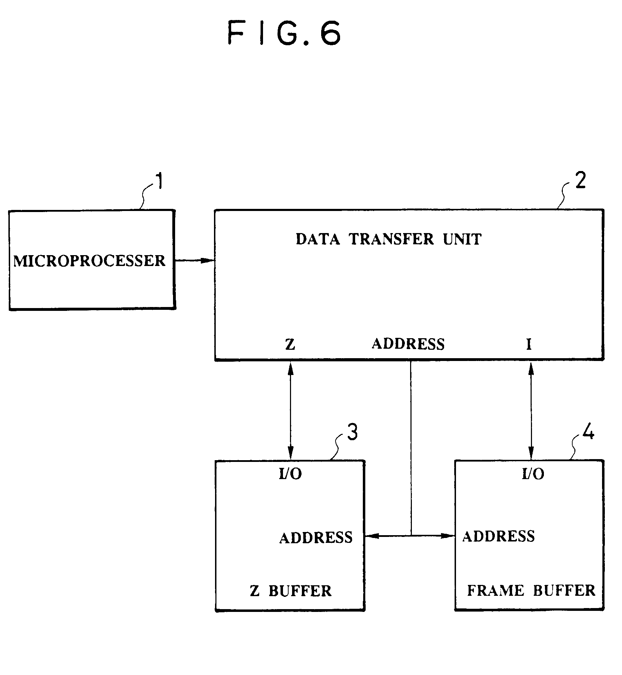

Fig.6 is a block diagram to schematically show construction of a graphic processor as an embodiment of the present invention;

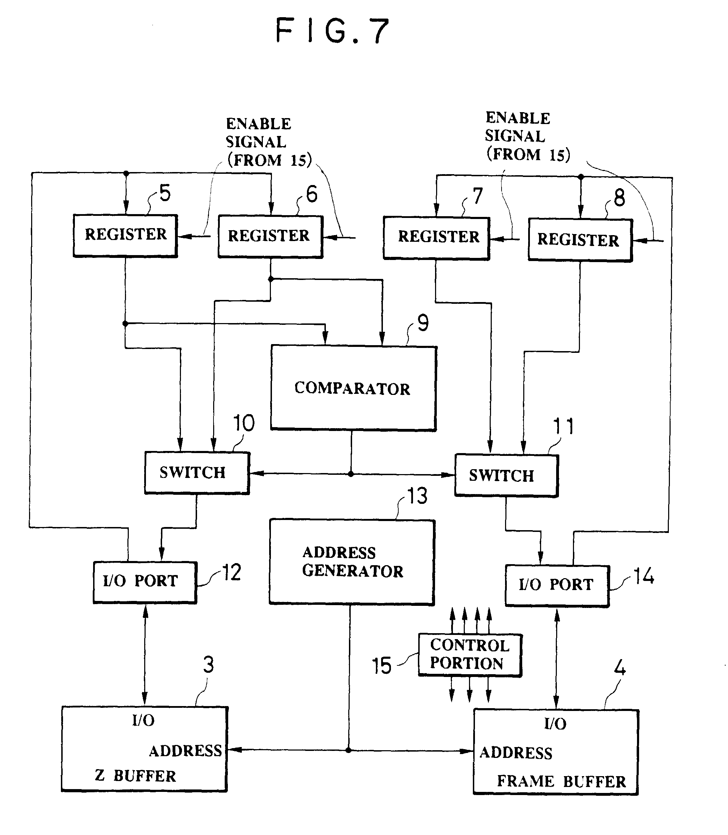

Fig.7 is a block diagram to show internal construction of a data transfer unit shown in Fig.6;

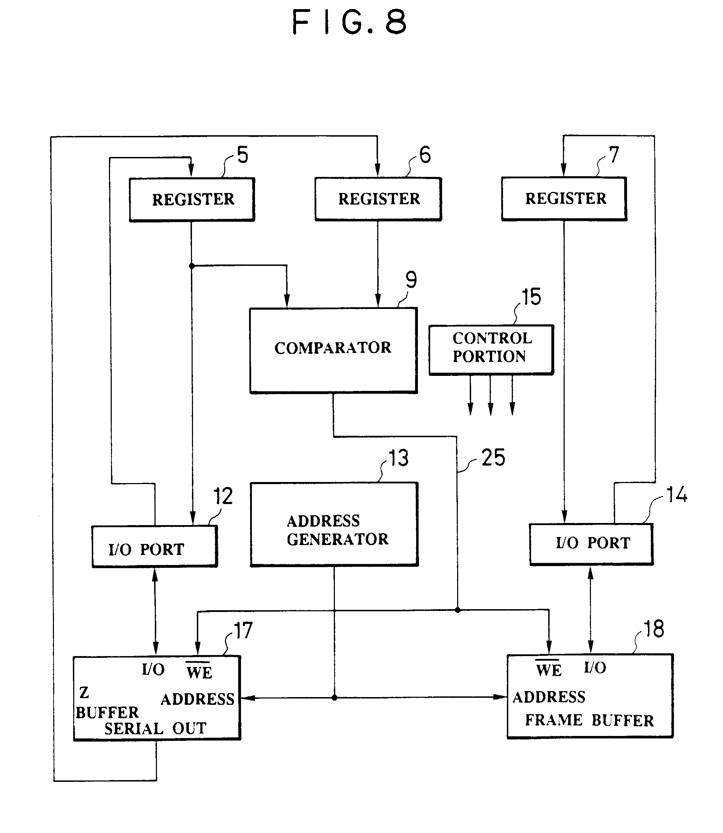

Fig.8 is a block diagram to show internal construction of a data transfer unit employed in a graphic processor as a second embodiment of the present invention;

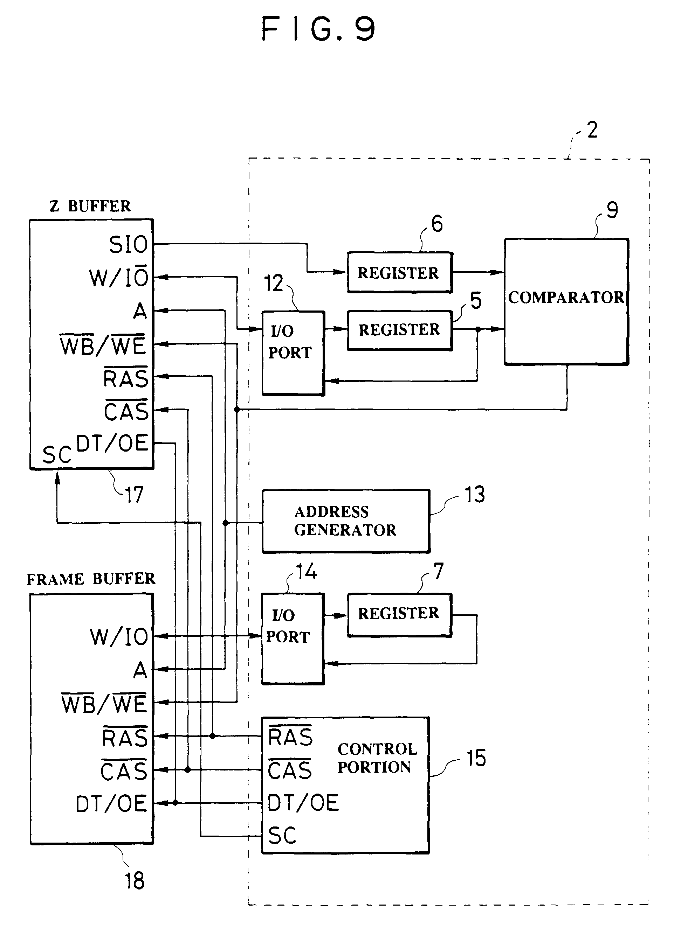

Fig.9 is a block diagram to explain in more detail the data transfer unit shown in Fig.8;

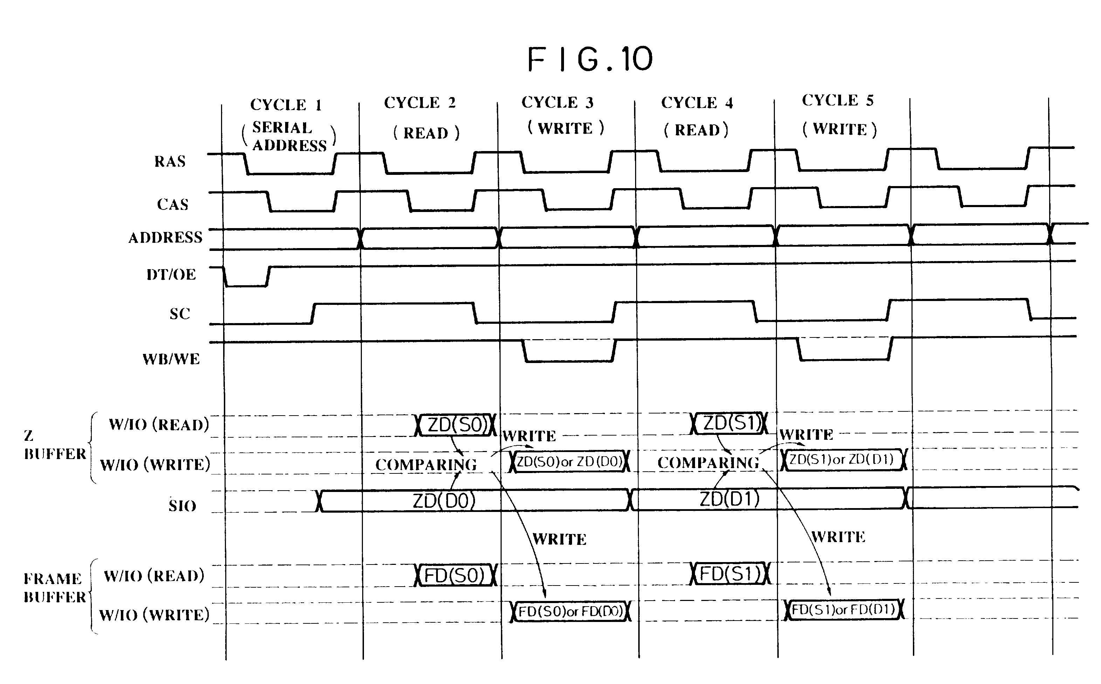

Fig.10 is a time chart for explaining operation of the second embodiment shown in Fig.8;

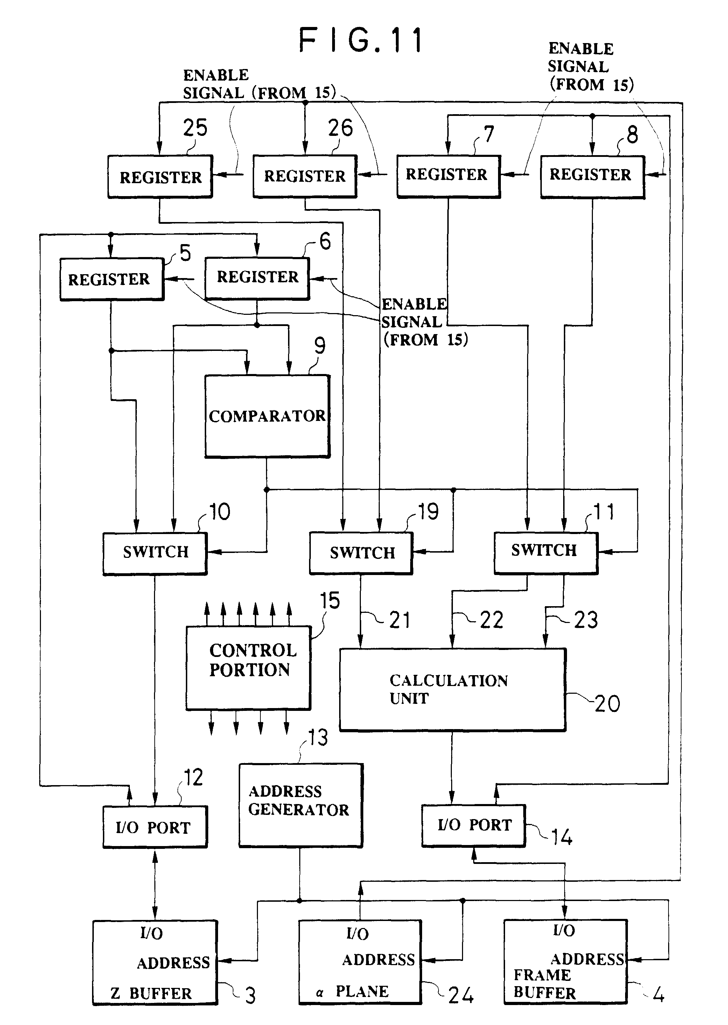

Fig.11 is a block diagram to show internal construction of a data transfer unit employed in a graphic processor as a third embodiment of the present invention;

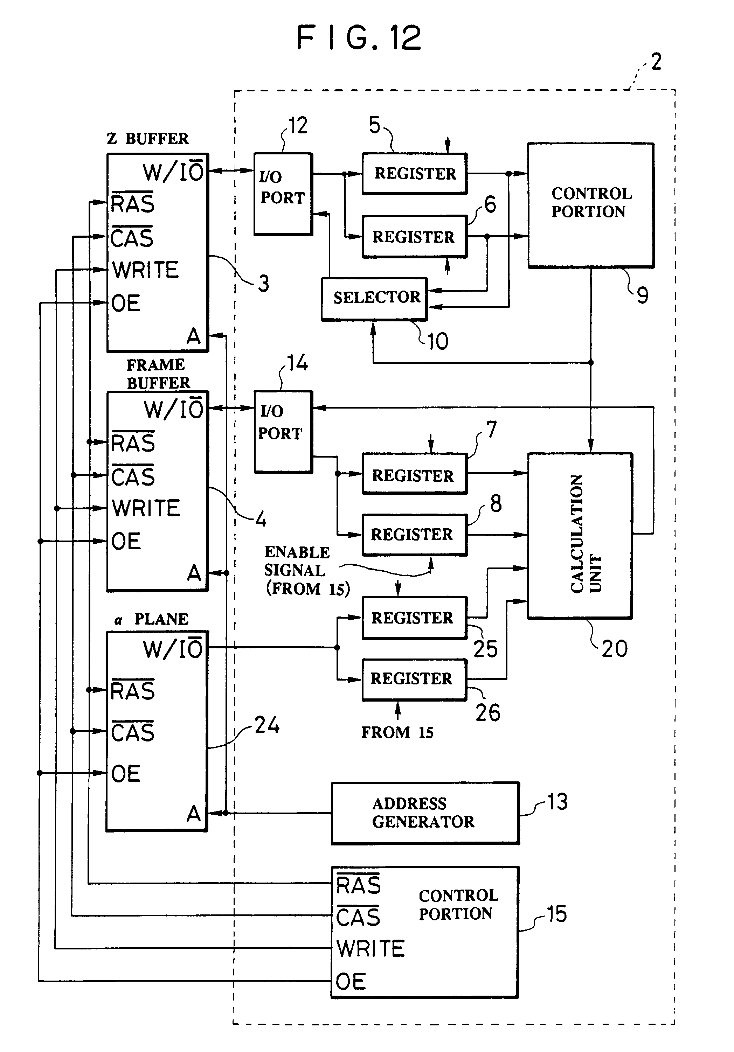

Fig.12 is a block diagram to explain in more detail the data transfer unit shown in Fig.11; and

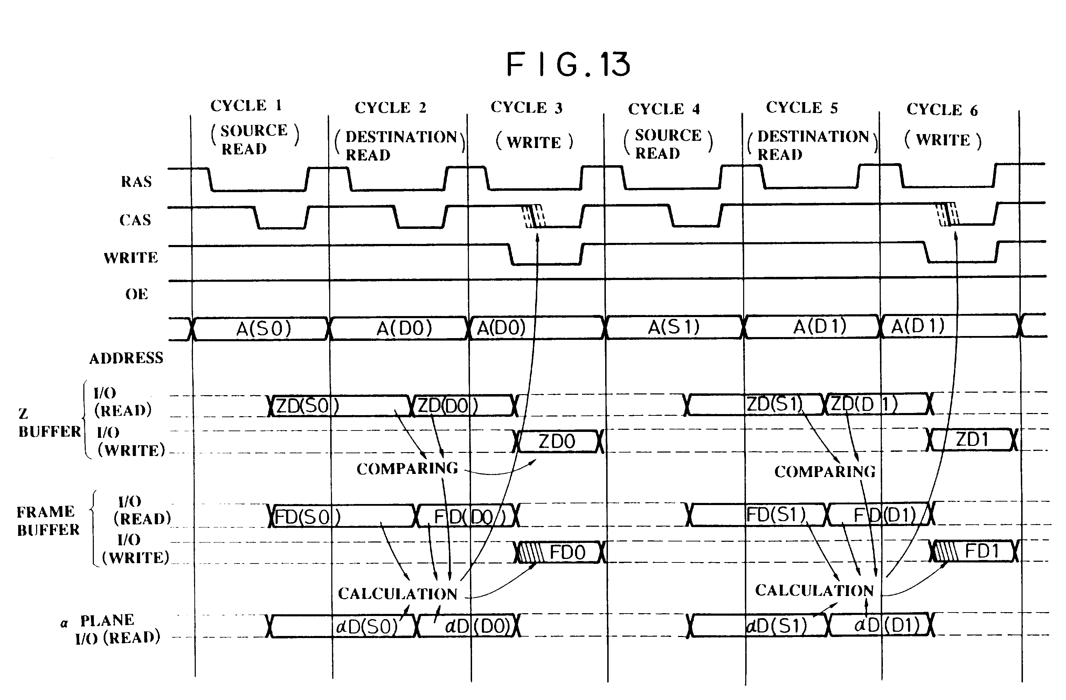

Fig.13 is a time chart for explaining operation of the third embodiment shown in Fig.11.

DETAILED DESCRIPTION OF THE EMBODIMENTS

Fig.6 is a block diagram to show construction of a graphic processor according to an embodiment of the present invention.

As shown in the same drawing, the graphic processor comprises a microprocessor 1, a data transfer unit 2, a Z buffer 3 and a frame buffer 4.

The microprocessor 1 designates to the data transfer unit 2 the head address of a source figure, the head address of a destination figure and the size of data to be transferred.

The data transfer unit 2, the most important point of the present invention, transfers figure data respectively held in the Z buffer 3 and frame buffer 4. In more detail, the data transfer unit 2 reads color and Z values of each pixel in both of the source and destination figures, so as to compare the Z values of both figures. Moreover, the data transfer unit 2 writes each color value or Z value of the destination figure or source figure in an area of the destination figure based on the comparison result on the Z values.

The Z buffer 3 stores the Z values of each pixel of these figures.

Moreover, the frame buffer 4 stores color value of each pixel as a bit map.

Next, the operation of the graphic processor of the first embodiment is generally explained.

On the first stage, each Z value is stored in the Z buffer 3, and each figure data in the frame buffer 4 as a bit map.

Then, the head addresses of both of the source and destination figures and the size of transfer data are designated by the microprocessor 1 to the data transfer unit 2 for overlapping figures.

As the result, addresses respectively corresponding to the Z buffer 3 and frame buffer 4 are generated by an address generator incorporated in the data transfer unit 2. Moreover, color and Z values of each pixel in both of the source and destination figures are supplied to the data transfer unit 2, then the Z values of both figures are compared.

Thereafter, the color and Z values of each pixel in the destination figure are renewed into the color and Z values of each pixel in the source figure only when the source figure is to be shown in the foreground of the destination figure.

Accordingly, since the figure data of the Z buffer 3 and frame buffer 4 are transferred through the data transfer unit 2 with comparing the Z values in both figures for one pixel, it becomes possible to obtain a picture image composed by overlapping the source and destination figures with correctly expressing the depth relation between both of the figures.

Next, the construction and operation of the data transfer unit 2 of the graphic processor according to the first embodiment is explained with reference to Fig. 7.

As shown in the same drawing, the data transfer unit 2 comprises a Z value register 5 for the destination figure, a Z value register 6 for the source figure, a color value register 7 for the destination figure, a color value register 8 for the source figure, a Z value comparator 9, switches 10, 11 for respectively selecting color values and Z values to be respectively written into the Z buffer 3 and frame buffer 4 in accordance with the comparison result obtained from the Z value comparator 9, I/O ports 12, 14 for the Z buffer 3 and frame buffer 4, an address generator 13 and a control unit 15 for controlling each section of the data transfer unit 2.

Incidentally, bit-map figure data are prepared in the Z buffer 3 and frame buffer 4, and input and output of the data are carried out through suitable random ports.

First, the respective head addresses of the source and destination figures and the size of data are designated by the microprocessor 1 to the address generator 13. Then, the address generator 13 generates corresponding addresses and gives them to the Z buffer 3 and frame buffer 4 respectively.

From the Z buffer 3 and frame buffer 4 are respectively read out color values and Z values of respective pixels in the souce and destination figures through the I/O ports 12, 14. Then, the color values of the source and destination figures are respectively set in the registers 8, 7, while the Z values of the source and destination figures are respectively set in the registers 6, 5.

In this case, the Z values of the source and destination figures are suitably allocated from the I/O port 12 to the registers 5 and 6 by enable signals to be given to the the registers 5 and 6 from the control unit 15. Likewise, the color values are allocated from the I/O port 14 to the registers 8, 7. Incidentally, it is also possible to provide selectors on the previous stage to the respective registers in place of using the enable signals.

Next, the Z values of the source and destination figures respectively set in the registers 5, 6 are compared by the comparator 9, and the comparison result is given as a switching signal to the switches 10, 11. In this case, if the comparison result shows that the pixels of the source figure are in the foreground of those of the destination figure, that is, if each Z value of the source figure is smaller than that of the destination figure, the color values and Z values of the source figures are selected. Namely, the register 6 is selected by the switch 10, and the register 8 is selected by the switch 11. On the contrary, if the pixels of the destination figure are in the foreground of those of the source figure, the contents of the registers 5, 7 are selected.

Then, the values of the respective registers selected are rewritten by random ports into the Z buffer 3 and frame buffer 4 through the I/O ports 12, 14.

In such a manner, by comparing the respective Z values, the pixel values of the destination figure are respectively renewed into the Z values and color values of the source figure only when the pixels of the source figure are in the foreground of those of the destination figure. Moreover, by carrying out such operation over all of the transfer data, there can be obtained a picture image on which the depth relation between the source and destination figures is fully considered.

Fig.8 is a block diagram to show construction of a data transfer unit of a graphic processor as a second embodiment of the present invention.

The data transfer unit of the second embodiment in Fig.8 has such construction that the register 8 and switches 10, 11 are removed from the construction of the data transfer unit of the first embodiment shown in Fig.7. Moreover, in place of the Z buffer 3 and frame buffer 4 as described in the first embodiment, a Z buffer 17 and a frame buffer 18 respectively having dual-port memories are provided in the second embodiment. Incidentally, the parts respectively designated by the same reference numerals or characters in Fig.7 have the same functions in Fig.8.

In the graphic processor having such construction, each Z value of the source figure is read out through a random port of the Z buffer 17, and set in the register 5 through the I/O port 12. While, each Z value of the destination figure is read out from a serial port of the Z buffer 17, and set in the register 6. At the time, the reading processes of the Z values of the source and destination figures are carried out simultaneously in one cycle. Accordingly, the reading speed of these Z values from the Z buffer 17 is more enhanced. The detailed explanation on the operation will be given later.

On the other hard, only each color value of the source figure is read out from a random port of the frame buffer 19, and set in the register 7 through the I/O port 14. In this case, since the color value of the destination figure is the same as that to be written when the comparison result on the Z values shows that the pixels of the destination figure are in the foreground of those of the source figure, the reading process of this value is not required. Namely, each color value of the destination figure has only to be renewed into that of the source figure only when the comparison result on the Z values shows that the pixels of the source figure are in the foreground of those of the destination figure. Accordingly, only the color values of the source figure should be set in the register 7.

When the Z values respectively set in the registers 5, 6 are compared, a write enable signal 25 is generated by the comparator 9. By the write enable signal 25, new Z values and color values are written in the frame buffer 18 and Z buffer 17. Moreover, when the comparison result of the Z values shows that the pixels of the source figure are in the foreground of the pixels of the destination figure, the write enable signal 25 becomes active. As the result, each pixel of the destination figure is renewed into a color value and a Z value of the source figure. On the other hand, when the pixels of the destination figure are in the foreground of those of the source figure, the write enable signal becomes inactive so that the pixels are not renewed.

Accordingly, in the graphic processor of the second embodiment, it becomes possible to realize a high-speed graphic process of an overlapped picture image by using a dual port memory for the Z buffer 17.

Figs.9 and 10 are given to explain in more detail the respective construction and operation of the data transfer unit and the dual-port Z buffer 17 and frame buffer 18 in the second embodiment.

Fig.9 shows further detailed construction of the data transfer unit of the second embodiment using a VRAM (multi-port DRAM). Moreover, Fig.10 shows a time chart for showing the operation of the data transfer unit.

As described above, in the second embodiment is used a VRAM for the Z buffer 17 so as to attempt a high-speed graphic process by the random port W/IO and serial port SIO. Namely, the serial port SIO of the Z buffer 17 is exclusively used for reading destination data, while the random port W/IO is used for reading source data and writing them as destination data. In this case, the Z buffer 17 and frame buffer 18 are controlled by common addresses, RAS, CAS, WB/ET. The other terminals of the VRAM are all inactive.

In Fig.10, an address of a transfer start signal is produced by the address generator 13. To read destination data from the serial port SIO of the Z buffer 17, a start address A[DO] is set in cycle 1 to read the data by a serial port control signal SC. Namely, the reading operation from the serial port SIO is controlled by the serial port control signal SC. Then, the destination data read out are held in the register 6. Thereafter, an address A[SO] of source data is set in cycle 2 to respectively read souce data ZD[SO], FD[SO] from the Z buffer 17 and frame buffer 18. These source data are respectively held in the registers 5, 7. At the time, in the serial port of the Z buffer 17 is prepared a Z value ZD[DO] of destination data. Then, the souce Z value ZD[SO] already read out from the Z buffer 17 is compared with the Z value ZD[DO] by the comparator 9. Based on the comparison result, respective data are written in cycle 3 as follows. First, the destination address A[DO] is set as an address. Then, the write signal WB/WE is set active to write the source data into the Z buffer 17 and frame buffer 18 only when the source Z value is smaller than the destination Z value. While, in the serial port is prepared the next destination data D[D1] for the next cycle.

In cycle 4, data of the next address A[D1] are read in the same manner as in the cycle 2, then source and destination data ZD[S1] and ZD[D1] are compared. In cycle 5, the write signal WB/WE signal is produced in the same manner as in the cycle 3, then data are written into the Z buffer 17 and the frame buffer 18. By continuing such cycles up to a transfer end address, the source and destination figures are overlapped.

Fig.11 is a block diagram of a data transfer unit as a third embodiment of the present invention.

In the third embodiment, color calculation is carried out by using the occupation ratio $\alpha$ of the pixels so as to overlap figures. Thus, in the graphic processor according to the third embodiment, there are provided an $\alpha$ plane for holding the occupation ratio $\alpha$ of the pixels in the respective bit-map figures, registers 25, 26 for storing the $\alpha$ value, and a calculation unit 20 for calculating color based on the $\alpha$ value.

Here, the calculation of color based on the $\alpha$ value is explained. Namely, the color of each pixel is calculated in accordance with the following formula:

$$I = \alpha \times I_f + (1 - \alpha) \times I_b$$

where I is a color value of a pixel, $\alpha$ is an $\alpha$ value, $I_f$ is a color value of a front pixel, and $I_b$ is a color value of a rear pixel.

Namely, the calculation unit 20 calculates color of each pixel based on this formula. In this case, to the calculation unit 20 are supplied an output signal 21 as the $\alpha$ value from a switch 19, and an output signal 22 as the color value of the front pixel and an output signal 23 as the color value of the rear pixel from a switch 11.

Next, the operation of the graphic processor according to the third embodiment is explained.

Each color value of figures is read out from a frame buffer 4, and is set in a register 8 when the value is a color value of the source figure or in a register 7 when it is a color value of the destination figure. Likewize, each Z value is read out from a Z buffer 3, and is set in a register 5 or 6 through an I/O port 12. In this case, each Z value of the destination figure is set in the register 5, while each Z value of the source figure is set in the register 6.

Incidentally, also in this embodiment, it is possible to use a dual-port memory as the Z buffer 4 in the same manner as in case of the second embodiment to realize a high speed graphic process.

Each $\alpha$ value is read out from the $\alpha$ plane, and is stored in the register 26 when the value is related to the source figure or in the register 25 when it is related to the destination figure.

Then, Z values of the registers 5, 6 are compared by a comparator 9, and if the comparison result shows that the pixels of the source figure are in the foreground of those of the destination figure, the register 6 for the source figure is selected by a switch 10. Moreover, the $\alpha$ value of the source figure in the register 26 is selected by the switch 19, then supplied to the calculation unit 20 as the input signal 21. Besides, the color value of the source figure in the register 8 is supplied to the calculation unit 20 as the input signal 22, and the color value of the destination figure in the register 7 is supplied to the unit 20 as the input signal 23.

On the other hand, if the above-mentioned comparison result shows that the pixels of the destination figure are in the foreground of those of the source figure, the register 5 for the destination figure is selected by the switch 10, and the $\alpha$ value of the destination figure in the register 25 is selected by the switch 19. As the result, the $\alpha$ value of the destination figure is given to the calculation unit 20 as the input signal 21. Moreover, by the switch 11, the color value of the destination figure in the register 7 is supplied to the unit 20 as the input signal 22, and the color value of the source figure in the register 8 is also given thereto as the input signal 23.

Then, each Z value selected by the switch 10 is written into each corresponding pixel of the destination figure of the Z buffer 3 through the I/O port 12. Likewize, each color value produced from the calculation unit 20 is written into each corresponding pixel of the destination figure of the frame buffer 4.

In such a manner, each $\alpha$ value is calculated by the calculation unit 20, and an overlapped picture image is produced based on the destination figure.

Figs.12 and 13 are given to explain in more detail the construction and operation of the data transfer unit, $\alpha$ plane, Z buffer and frame buffer in the third embodiment.

Fig.12 shows detailed construction of the data transfer unit of the third embodiment, and Fig.13 is a time chart for explaining the operation of the data transfer unit.

In this case, the Z buffer 3, frame buffer 4 and $\alpha$ plane 24 are all controlled by common RAS, CAS, WB/WE, DT/OE. Incidentally, since the $\alpha$ plane 24 is used only for reading, the write operation is inactive. Besides, the other terminals are all inactive.

Next the operation of this embodiment is explained. First, source data are read out in cycle 1. Namely, a source data address A[SO] is set, and source data ZD[SO], FD[SO], $\alpha$ D[SO] are respectively read out from the Z buffer 3, frame buffer 4 and $\alpha$ plane 24 and held in the registers 6, 8, 26. In cycle 2, destination data are read out in the same manner as in the case of reading source data in the cycle 1. Namely, respective data ZD[DO], FD[DO], $\alpha$ D[DO] corresponding to an address A[DO] are read out from the respective buffers and stored in registers 5, 7, 25. When the respective source and destination data are prepared, the comparison of Z values of the source and destination figures and calculation on each color value of pixels to be written into the frame buffer 4 are carried out. Namely, the source and destination values respectively stored in the registers 5, 6 are compared with each other, and data are so selected by the selector 10 as to write the one whose Z value is smaller in the next cycle. In this case, the calculation unit 20 selects and calculates data held in the registers 7, 8, 25, 26 based on the comparison result.

If the comparison result shows that the data of the source figure are in the foreground of those of the destination figure (ZD[DO]>ZD[SO]), each color value is calculated into the following formula:

$$(\alpha\,D[SO]) * (FD(SO)) + (1 - \alpha\,D[SO]) * (FD[DO])$$

On the other hand, if the data of the destination figure are in the foreground (ZD[DO]$\leqq$ ZD[SO]), each color value is expressed by:

$$(\alpha\,D[DO]) * (FD[DO]) + (1 - \alpha\,D[DO]) * (FD[SO])$$

After the calculation, the following data are written in cycle 3. Namely, the address A[DO] of the destination figure is stored, and the calculation result FDO is given to the frame buffer 4. Moreover, the comparison result ZDO is written into the Z buffer 3. If the calculation requires relatively long time, and is not finished even when the procedure goes into the cycle 3, the timing of RAS in the cycle 3 is delayed so that the above-mentioned data writing is carried out after the calculation is completed.

The same processes as those in the cycles 1, 2, 3 are continued with counting up each address in and after cycle 4. As the result, it becomes possible to realize overlap of figures including $\alpha$ blending.

Namely, according to the above three embodiments of the present invention, it becomes possible to realize a high-speed graphic process for overlapping a plurality of figures. For example, in producing animated cartoons, movement of a picture image can be formed at a high speed by separately preparing the back ground to be fixed and figures to be moved in advance. Moreover, a complex picture image can be easily produced by overlapping a plurality of simple figures prepared in advance, so that this invention can be also used for modeling.

In summary, according to the graphic processor of the present invention, a picture image can be produced by overlapping a plurality of figures prepared in advance. Moreover, a partial change of each compositional figure can be realized at a high speed by overlapping the part to be changed without changing all of the picture image already produced.

**Claims**

1. A graphic processor, comprising:

   figure memory means for storing color values of pixels of a plurality of bit-map images;

   depth value memory means for storing depth values of pixels of the plurality of bit-map images;

   transfer means (2) for transferring a bit-map image to be transferred onto a memory region of a target bit-map image ;

   temporary memory means (3, 4) for temporarily storing color values and depth values of pixels of the plurality of bit-map images supplied from the figure memory means and the depth value memory means and separating these values into those of the bit-map image to be transferred and those of the transfer target bit-map image;

   comparison means (9) for comparing the depth values of respective pixels of the bit map image to be transferred and of the target bit map image;

   control means (15) for controlling read and write operation of the figure memory means, depth value memory means and temporary memory means (3, 4) so that a pixel value of the bit-map image to be transferred is written onto the target bit map image when the depth value of the bit map image to be transferred is less than the depth value of the transfer target bit-map image in accordance with the comparison result obtained from the comparison means (9) so that the color values and bit values are selectively transferred from the temporary memory means (3, 4) to the figure memory means and depth value memory means respectively.

2. The graphic processor according to claim 1, **characterized** in that
   each pixel value comprises a color value and a depth value of a figure.

3. The graphic processor according to claim 1 or 2, **characterized** in that
   the control means (15) comprises a switch means for switching the color values and depth values of the bit map image to be transferred and the color values and depth values of the transfer target bit

map image in accordance with the comparison result obtained from the comparison means (9) and for transferring the values respectively switched to the figure memory means and depth value memory means.

4. The graphic processor according to one of the preceding claims,
   **characterized** in that
   the depth value memory means is so constructed as to simultaneously read the depth values of the bit map image to transferred and the depth values of the transfer target bit-map image.


**Patentansprüche**

1. Ein Graphikprozessor, umfassend:

   eine Figurspeichervorrichtung, um Farbwerte von Bildelementen einer Vielzahl von Bit-Map-Bildern zu speichern;

   eine Tiefenwertspeichervorrichtung, um Tiefenwerte von Bildelementen der Vielzahl von Bit-Map-Bildern zu speichern;

   eine Übertragungsvorrichtung (2), um ein zu übertragendes Bit-Map-Bild auf einen Speicherbereich eines Ziel Bit-Map-Bildes zu übertragen;

   eine Temporärspeichervorrichtung (3, 4), um Farbwerte und Tiefenwerte von Bildelementen der Vielzahl von Bit-Map-Bildern, die von der Figurspeichervorrichtung und der Tiefenwertspeichervorrichtung bereitgestellt werden, temporär zu speichern, und um diese Werte in die des zu übertragenden Bit-Map-Bildes und die des Übertragungsziel-Bit-Map-Bildes aufzutrennen;

   eine Vergleichsvorrichtung (9), um die Tiefenwerte von jeweiligen Bildelementen des zu übertragenden Bit-Map-Bildes und des Ziel-Bit-Map-Bildes zu vergleichen;

   eine Steuervorrichtung (15), um einen Lese- und Schreibbetrieb der Figurspeichervorrichtung, der Tiefenwertspeichervorrichtung und der Temporärspeichervorrichtung (3, 4) zu steuern, so daß ein Bildelementwert des zu übertragenden Bit-Map-Bildes auf das Ziel-Bit-Map-Bild geschrieben wird, wenn der Tiefenwert des zu übertragenden Bit-Map Bildes geringer als der Tiefenwert des Übertragungsziel-Bit-Map-Bildes ist, in Übereinstimmung mit dem von der Vergleichsvorrichtung (9) erhaltenen Vergleichsergebnis, so daß die Farbwerte und Bit-Werte selektiv von der Temporärspeichervorrichtung (3, 4) zur Figurspeichervorrichtung bzw. Tiefenwertspeichervorrichtung übertragen werden.

2. Der Graphikprozessor nach Anspruch 1,
   dadurch **gekennzeichnet**, daß
   jeder Bildelementwert einen Farbwert und einen Tiefenwert einer Figur umfaßt.

3. Der Graphikprozessor nach Anspruch 1 oder 2,
   dadurch **gekennzeichnet,** daß
   die Steuervorrichtung (15) eine Umwechselvorrichtung umfaßt, um die Farbwerte und Tiefenwerte des zu übertragenden Bit-Map-Bildes und die Farbwerte und Tiefenwerte des Übertragungsziel-Bit-Map-Bildes in Übereinstimmung mit dem von der Vergleichsvorrichtung (9) erhaltenen Vergleichsergebnis umzuwechseln, und um die jeweilig umgewechselten Werte zur Figurspeichervorrichtung und Tiefenwertspeichervorrichtung zu übertragen.

4. Der Graphikprozessor nach einem der vorhergehenden Ansprüche, dadurch **gekennzeichnet**, daß die Tiefenwertspeichervorrichtung so aufgebaut ist, daß sie gleichzeitig die Tiefenwerte des zu übertragenden Bit-Map-Bildes und die Tiefenwerte des Übertragungsziel-Bit-Map-Bildes lesen kann.


**Revendications**

1. Processeur graphique, comprenant :

   un moyen à mémoire de figures pour stocker des valeurs de couleurs de pixels d'une pluralité d'images en mode point ;
   un moyen à mémoire de valeurs de profondeur pour stocker des valeurs de profondeur de pixels d'une pluralité d'images en mode point ;
   un moyen (2) de transfert pour transférer une image en mode point à transférer vers une région de mémoire d'une image en mode point cible ;
   un moyen (3, 4) à mémoire temporaire pour stocker temporairement des valeurs de couleurs et des valeurs de profondeur de pixels de la pluralité d'images en mode point délivrées par le moyen à mémoire de figures et par le moyen à mémoire de valeurs de profondeur et pour séparer ces valeurs en celles de l'image en mode point à transférer et celles de l'image en mode point cible de transfert ;
   un moyen (9) de comparaison pour comparer les valeurs de profondeur des pixels respectifs de l'image en mode point à transférer et de l'image en mode point cible ;

un moyen (15) de commande pour commander une opération de lecture et d'écriture du moyen à mémoire de figures, du moyen à mémoire de valeurs de profondeur et du moyen (3, 4) à mémoire temporaire afin qu'une valeur de pixel de l'image en mode point à transférer soit écrite sur l'image en mode point cible lorsque la valeur de la profondeur de l'image en mode point à transférer est inférieure à la valeur de la profondeur de l'image en mode point cible de transfert en fonction du résultat de comparaison obtenu du moyen (9) de comparaison, de sorte que les valeurs de couleurs et les valeurs binaires sont sélectivement transférées du moyen (3, 4) à mémoire temporaire respectivement au moyen à mémoire de figures et au moyen à mémoire de valeurs de profondeur.

2. Processeur graphique selon la revendication 1, caractérisé en ce que chaque valeur de pixel comprend une valeur de couleur et une valeur de profondeur d'une figure.

3. Processeur graphique selon la revendication 1 ou 2, caractérisé en ce que le moyen (15) de commande comprend un moyen de permutation pour permuter les valeurs de couleurs et les valeurs de profondeur de l'image en mode point à transférer et les valeurs de couleurs et les valeurs de profondeur de l'image en mode point cible de transfert en fonction du résultat de comparaison obtenu du moyen (9) de comparaison et pour transférer les valeurs respectivement permutées au moyen à mémoire de figures et au moyen à mémoire de valeurs de profondeur.

4. Processeur graphique selon l'une des revendications précédentes, caractérisé en ce que le moyen à mémoire de valeurs de profondeur est conçu de façon à lire simultanément les valeurs de profondeur de l'image en mode point à transférer et les valeurs de profondeur de l'image en mode point cible de transfert.

EP 0 467 394 B1

## FIG. 1

## FIG.2

## FIG.3

## FIG.4

## FIG.5

# F I G. 6

# FIG. 7

ENABLE
SIGNAL
(FROM 15)

ENABLE
SIGNAL
(FROM 15)

5  REGISTER

6  REGISTER

7  REGISTER

8  REGISTER

9  COMPARATOR

10  SWITCH

11  SWITCH

12  I/O PORT

13  ADDRESS
GENERATOR

14  I/O PORT

15  CONTROL
PORTION

3  I/O
ADDRESS
Z BUFFER

4  I/O
ADDRESS
FRAME BUFFER

# FIG. 8

# F I G. 9

F I G . 10

# F I G.11

# FIG. 12

# FIG.13

CYCLE 1 (SOURCE READ)  CYCLE 2 (DESTINATION READ)  CYCLE 3 (WRITE)  CYCLE 4 (SOURCE READ)  CYCLE 5 (DESTINATION READ)  CYCLE 6 (WRITE)

RAS

CAS

WRITE

OE

ADDRESS: A(S0)  A(D0)  A(D0)  A(S1)  A(D1)  A(D1)

Z BUFFER I/O (READ): ZD(S0)  ZD(D0)  ZD(S1)  ZD(D1)

Z BUFFER I/O (WRITE): ZD0  ZD1

COMPARING  COMPARING

FRAME BUFFER I/O (READ): FD(S0)  FD(D0)  FD(S1)  FD(D1)

FRAME BUFFER I/O (WRITE): FD0  FD1

CALCULATION  CALCULATION

α PLANE I/O (READ): αD(S0)  αD(D0)  αD(S1)  αD(D1)

EP 0 467 394 B1